# EUROPEAN PATENT APPLICATION

(11) **EP 4 220 150 A1**
(43) Date of publication of application: **02.08.2023**
(21) Application number: 21905849.2
(22) Date of filing: 18.12.2021
(51) Int. Cl.: G01N 30/06, G01N 30/20, G01N 1/14, G01N 35/00

(54) **LIQUID-PHASE AUTOMATED SYNTHESIZER**

(30) Priority: 19.12.2020 CN 202011508994
(71) Applicant: Peking University, Beijing 100871 (CN)
(72) Inventor: YE, Xinshan, Beijing 100871 (CN); YAO, Wenlong, Beijing 100871 (CN); XIONG, Decai, Beijing 100871 (CN)
(74) Representative: FRKelly
(86) International application number: PCT/CN2021/139399
(87) International publication number: WO 2022/127927

(57) **Abstract**

An automated solution-phase synthesizer is provided with an automatic sample injection system, an assisting system for solution-phase synthesis, an automatic online monitoring system for solution-phase synthesis and a master computer. The automatic sample injection system completes an automatic sample injection operation according to a sample injection instruction from the master computer. The assisting system for solution-phase synthesis controls temperature and illumination of a solution to undergo reaction according to a temperature control instruction and an illumination control instruction from the master computer. The automatic online monitoring system for solution-phase synthesis monitors a reaction solution and generates a monitoring report. And, the master computer generates an experimental analysis result according to the monitoring report. In this way, an automatic process from sample injection to report generation in a solution-phase experiment process is completed, and further experimental labor cost is reduced and experimental efficiency is improved.

## Description

### TECHNICAL FIELD

The present disclosure relates to the technical field of experimental apparatuses, and particularly relates to an automated solution-phase synthesizer.

### BACKGROUND

A solution-phase experiment is essential for academic research. During the existing solution-phase experiments, a mixed solution is obtained by manually and quantitatively adding a solution to undergo reaction and manually controlling stirred reaction. In order to monitor the mixed reaction, it is necessary to manually add reaction liquid to a monitor and manually collate and check a monitoring report generated by the monitor, thereby resulting in a laborious monitoring process of the solution-phase experiment.

In view of this, some automatic sample injection devices have been provided in the prior art, and the sample injection manners of the automatic sample injection device mainly include the following two manners. The first sample injection manner is a manner of injecting samples by pipeline transfer, which involves a polypeptide solid-phase synthesizer, an oligosaccharide solid-phase synthesizer and an automatic solid-phase extractor etc. on the market. Advantageously, the automatic sample injection device with the first sample injection manner is airtight in system, safe, free of external interference and superior in systematization. Disadvantageously, the automatic sample injection device by pipeline transfer requires a long research and development cycle as well as high design and development cost of a single finished product. Two designing methods are applicable to the automatic sample injection device with the first sample injection manner. The first method is to purchase and assemble the components of the above automatic sample injection device, which is adjustable and changeable, to integrate the programs conveniently (a syringe pump, a multi-channel switching valve, a light source, low-temperature circulation, magnetic stirring, online monitoring, etc.). However, through this method, a system redesign, a long cycle, and a wide range of talents will still be required, and a number of factors can influence operation results after assembling these components. The second method is to upgrade similar commercial products, that is, to appropriately transform the above automatic sample injection device to be a mature and automatic product. Through this method, integration of programs will be labor-consuming since the mature products are equipped with their own patented mature software control systems, and redesigning an integrated board will possibly be required without source codes, despite a short cycle and normal work with few workers. The second sample injection manner is a manner of injecting sample by the automatic liquid shift, which involves mature workstations for the automatic liquid shift (at a price of 100,000-400,000 CNY) on the market. The workstations can be directly purchased and slightly modified for use. Advantageously, the automatic sample injection device with the second sample injection manner is simple, rapid and capable of replacing manual operation with mechanical operation. Disadvantageously, the automatic sample injection device with the second sample injection manner requires mechanical arms for all operations, thereby resulting in a higher failure rate and a demand for larger space. Further, the automatic sample injection device with the second sample injection manner, as the same mature products, faces inconvenient integration of programs.

In addition, the temperature control and the illumination control are critical to the solution-phase experiment. Solution reaction generally takes place in a two-opening quartz reactor during an existing solution-phase synthesis experiment, which cannot perform this experiment by illuminating from sides in a low-temperature groove at -80 °C During illumination from the sides, a long-arc mercury lamp and a cold trap made of quartz generally serve as a light source device. Such a light source device requires the quartz cold trap to be equipped with a low-temperature circulation device to keep a circulation temperature (-20 °C, because the mercury lamp cannot be switched on at a lower temperature) higher than the temperature of the low-temperature bath (-80 °C). As a consequence, the accurate control over the temperature of the low-temperature bath is far from easy, and the low-temperature circulation device needs to be additionally arranged and switched on in time before the mercury lamp is switched on. If the mercury lamp is switched on while the low-temperature circulation device of the cold trap is switched off, a considerable risk of the fire will be caused by long-time illumination from the mercury lamp switched on.

In order to solve the above problems, when the long-arc mercury lamp and the cold trap made of quartz are used for illumination, the cold trap is placed horizontally to allow ultraviolet light to illuminate a reactor from top to bottom, and the reactor is placed in an ethanol/dry ice low-temperature bath Dewar flask. In this way, the temperature can keep stable under control, and a model reaction synthesis effect is as good as that in a previous laboratory side-illumination way and even better. However, since the cold trap still needs to be cooled, the low-temperature circulation device of the cold trap needs to be switched on additionally, thereby resulting in inconvenience to instrument assembly, insecurity, ultralow utilization rate of ultraviolet light and requirement for an additional ultraviolet protector.

In view of this, there needs to provide an automatic solution-phase synthesis device with high efficiency and high precision and capable of automatic solution-phase experiments, which is a problem to be urgently solved in the art.

### SUMMARY

An objective of the present disclosure is to provide an automated solution-phase synthesizer, achieving automation of a solution-phase synthesis experiment and further improve experimental efficiency and experimental precision of the solution-phase synthesis experiment.

To achieve the above objective, the present disclosure provides the following technical solution.

An automated solution-phase synthesizer, including: an automatic sample injection system, an assisting system for solution-phase synthesis, an automatic online monitoring system for solution-phase synthesis, and a master computer.

The automatic sample injection system, the assisting system for solution-phase synthesis and the automatic online monitoring system for solution-phase synthesis are all electrically connected to the master computer.

The automatic sample injection system is configured to complete an automatic sample injection operation according to a sample injection instruction from the master computer; the assisting system for solution-phase synthesis is configured to control temperature and illumination of to-be-reacted solutions according to a temperature control instruction and an illumination control instruction from the master computer; the automatic online monitoring system is configured to monitor a first reaction solution therein, and generate a monitoring report; and the master computer generates an experimental analysis result according to the monitoring report.

Preferably, the automated solution-phase synthesizer further includes a reactor.

The reactor is connected to the automatic sample injection system, the assisting system for solution-phase synthesis and the automatic online monitoring system for solution-phase synthesis separately by means of first pipelines.

Preferably, the reactor includes: a bottle mouth, a bottle body, a sample injection port, an exhaust port, a sampling port, a circulating liquid outlet, and a circulating liquid inlet.

A set angle is formed between a center line of the sampling port and a center line of the bottle body; the exhaust port and the sample injection port are symmetrically arranged with a center line of the bottle mouth as a center.

The bottle body sequentially includes a reaction liner, a temperature circulating layer and a vacuum layer from inside to outside; and a bottom of the reaction liner is of an arc-shaped structure.

The sampling port is in communication with the reaction liner.

The circulating liquid outlet and the circulating liquid inlet are both in communication with the temperature circulating layer, and the circulating liquid outlet and the circulating liquid inlet are diagonally arranged.

Preferably, the automatic sample injection system includes: an inert gas conveying module, a sampling channel switching module, a quantification module, a disposal module, and a liquid storage module.

The liquid storage module and the sampling channel switching module are both connected to the inert gas conveying module by means of second pipelines; the quantification module is connected to the sampling channel switching module and the disposal module separately by means of third pipelines; and the liquid storage module is connected to the sampling channel switching module by means of a fourth pipeline.

The inert gas conveying module, the sampling channel switching module and the quantification module are all electrically connected to the master computer.

The inert gas conveying module is configured to convey inert gas stored inside the inert gas conveying module to the liquid storage module and the sampling channel switching module separately by means of the second pipelines; the sampling channel switching module is configured to extract the to-be-reacted solutions stored in the liquid storage module and to switch a respective channel of channels for extracting a corresponding one of the to-be-reacted solutions; and the quantification module is configured to determine an amount of one of the to-be-reacted solutions which is injected into the disposal module.

The master computer is configured to control the inert gas conveying module and the quantification module to be switched on or switched off, and to control the sampling channel switching module to switch the respective channel.

Preferably, the sampling channel switching module includes: a first multi-channel switching valve and a second multi-channel switching valve.

The first multi-channel switching valve is connected to M liquid storage bottles by means of fifth pipelines; and the second multi-channel switching valve is connected to N-M liquid storage bottles by means of sixth pipelines, where M is a number of liquid storage bottles connected with the first multi-channel switching valve; N is a total number of liquid storage bottles; and N-M is a difference between N liquid storage bottles and the M liquid storage bottles.

The quantification module includes: a syringe pump unit, a pressure sensor, a flowmeter, and a second solenoid valve unit.

An inlet of the syringe pump unit is connected to the sampling channel switching module by means of a seventh pipeline; an outlet of the syringe pump unit is connected to the flowmeter by means of an eighth pipeline; the flowmeter is connected to the disposal module by means of a ninth pipeline; the second solenoid valve unit is arranged on the ninth pipeline connected between the flowmeter and the disposal module; the pressure sensor is arranged on the eighth pipeline connected between the outlet of the syringe pump unit and the flowmeter; and the second solenoid valve unit, the pressure sensor and the flowmeter are all electrically connected to the master computer.

The disposal module includes: a solution pipe and a waste liquid bottle.

A sample injection port of the reactor and a liquid inlet of the waste liquid bottle are both connected to the second solenoid valve unit by means of tenth pipelines; and the solution pipe is connected to a circulating liquid inlet of the reactor by means of an eleventh pipeline.

The second solenoid valve unit is configured to close a twelfth pipeline connected between the flowmeter and the reactor and open a thirteenth pipeline connected between the flowmeter and the waste liquid bottle when one of the to-be-reacted solutions which is in the reactor reaches a set amount.

Preferably, the syringe pump unit includes: a first syringe pump and a second syringe pump.

The first syringe pump is connected to one channel of the first multi-channel switching valve by means of a fourteenth pipeline; the second syringe pump is connected to one channel of the second multi-channel switching valve by means of a fifteenth pipeline; and a measuring range of the first syringe pump is smaller than a measuring range of the second syringe pump.

Preferably, the assisting system for solution-phase synthesis includes: a mixing device and a temperature control device.

The reactor is arranged on the mixing device, and the mixing device and the temperature control device are both electrically connected to the master computer.

Preferably, the temperature control device includes: an ultraviolet light source and a low-temperature circulator.

A liquid outlet of the low-temperature circulator is connected to a circulating liquid inlet by means of a sixteenth pipeline; a liquid inlet of the low-temperature circulator is connected to a circulating liquid outlet by means of a seventeenth pipeline; and the ultraviolet light source is configured to illuminate the reactor.

The mixing device includes: an automatic stirrer and a thermostat plate.

The automatic stirrer and the thermostat plate are both electrically connected to the master computer; the automatic stirrer is configured for stirring a mixed solution in the reactor according to a stirring instruction from the master computer; the reactor is arranged on the automatic stirrer; and the thermostat plate is configured for keeping a temperature of the reactor constant.

Preferably, the automatic online monitoring system for solution-phase synthesis includes: a sampling module, a power module, a monitoring and analysis module, and a cleaning module.

The sampling module is connected to the power module by means of an eighteenth pipeline; the power module is connected to the monitoring and analysis module by means of a nineteenth pipeline; and the sampling module, the power module and the monitoring and analysis module are all electrically connected to the master computer.

The sampling module is configured to suck a second reaction solution contained in the reactor; the power module is configured to provide a suction force for the sampling module according to a suction instruction from the master computer and inject the second reaction solution sucked by the sampling module into the monitoring and analysis module to be used as the first reaction solution; the monitoring and analysis module is configured to generate a monitoring report according to the first reaction solution and then transmit the monitoring report to the master computer; and the master computer generates an analysis result according to the monitoring report.

The cleaning module is connected to the sampling module and the power module separately by means of twentieth pipelines.

Preferably, the sampling module includes: a stainless steel needle, a slide rail, and a turntable.

The stainless steel needle is connected to the power module by means of a conduit; the conduit is arranged on the slide rail, and a set angle is formed between the slide rail and a horizontal line; the stainless steel needle is fixedly arranged at one end of the slide rail, and another end of the slide rail is a free end; the slide rail is configured to drive the stainless steel needle to slide, and the stainless steel needle is configured for inserting into the reactor to suck the second reaction solution; the slide rail is fixedly arranged on the turntable; and the turntable and the slide rail are both electrically connected to the master computer.

The power module includes: a power pump; and the power pump is a syringe pump or a plunger pump.

The power pump is connected to the sampling module and the monitoring and analysis module separately by means of twenty-first pipelines.

The monitoring and analysis module is a high performance liquid chromatograph.

The cleaning module includes: a first liquid container, a second liquid container, and a solenoid valve.

The stainless steel needle sucks a cleaning solution from the first liquid container; and the second liquid container, the power module and the monitoring and analysis module are all connected to the solenoid valve by means of twenty-second pipelines.

According to specific embodiments provided by the present disclosure, the present disclosure has the following technical effects.

The automated solution-phase synthesizer provided by embodiments includes the automatic sample injection system, the assisting system for solution-phase synthesis, the automatic online monitoring system for solution-phase synthesis, and the master computer. In this way, the automatic sample injection system completes an automatic sample injection operation according to a sample injection instruction from the master computer. The assisting system for solution-phase synthesis controls temperature and illumination of a solution to undergo reaction according to a temperature control instruction and an illumination control instruction from the master computer. The automatic online monitoring system for solution-phase synthesis monitors a reaction solution and generates a monitoring report. And, the master computer generates an experimental analysis result according to the monitoring report. In this way, an automatic process from the sample injection to the report generation in a solution-phase experiment process is completed, and further experimental labor cost is reduced and experimental efficiency is improved.

### BRIEF DESCRIPTION OF THE DRAWINGS

To describe technical solutions in embodiments of the present disclosure or in the prior art more clearly, the accompanying drawings required for the embodiments are briefly described below. Apparently, the accompanying drawings in the following description show merely some embodiments of the present disclosure, and those of ordinary skill in the art can still derive other accompanying drawings from these accompanying drawings without creative efforts.
FIG. 1 is a block diagram of a structure of an automated solution-phase synthesizer according to embodiments of the present disclosure;

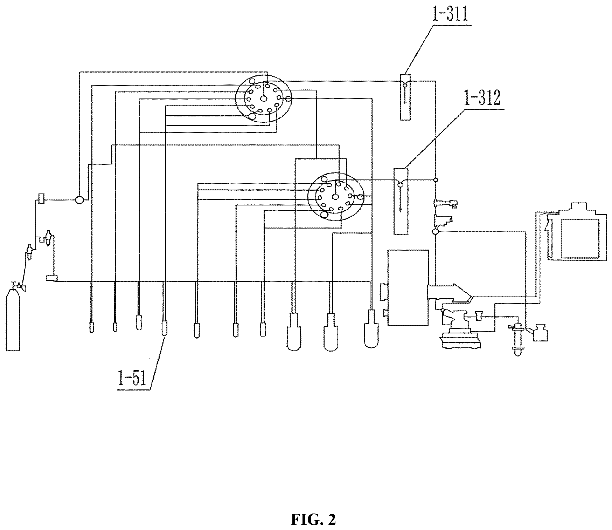

FIG. 2 is a schematic structural diagram of an automated solution-phase synthesizer according to embodiments of the present disclosure;
FIG. 3 is a schematic structural diagram of a reactor according to embodiments of the present disclosure;
FIG. 4 is a schematic structural diagram of an automatic sample injection system according to embodiments of the present disclosure;
FIG. 5 is a schematic structural diagram of an assisting system for solution-phase synthesis according to embodiments of the present disclosure;
FIG. 6 is a schematic structural diagram of an automatic online monitoring system for solution-phase synthesis according to embodiments of the present disclosure; and
FIG. 7 is a diagram of a physical object of an automated solution-phase synthesizer according to embodiments of the present disclosure.

### Reference Numerals:

1 automatic sample injection system, 1-1 inert gas conveying module, 1-11 inert gas storage container, 1-12 pressure regulating filter, 1-13 first solenoid valve unit, 1-131 first two-way solenoid valve, 1-132 second two-way solenoid valve, 1-133 three-way solenoid valve, 1-2 sampling channel switching module, 1-21 first multi-channel switching valve, 1-22 second multi-channel switching valve, 1-3 quantification module, 1-31 syringe pump unit, 1-311 first syringe pump, 1-312 second syringe pump, 1-32 pressure sensor, 1-33 flowmeter, 1-34 second solenoid valve unit, 1-4 disposal module, 1-41 reactor, 1-42 solution pipe, 1-43 waste liquid bottle, 1-5 liquid storage module, 1-51 liquid storage bottle, 2 assisting system for solution-phase synthesis, 2-1 temperature control device, 2-11 ultraviolet light source, 2-12 low-temperature circulator, 2-2 mixing device, 2-21 automatic stirrer, 2-22 thermostat plate, 3 automatic online monitoring system for solution-phase synthesis, 3-1 sampling module, 3-2 power module, 3-3 monitoring and analysis module, 3-4 cleaning module, 3-41 first liquid container, 3-42 second liquid container, 3-43 solenoid valve, 1-411 bottle mouth, 1-412 sample injection port, 1-413 exhaust port, 1-414 sampling port, 1-415 bottle body, 1-4151 reaction liner, 1-4152 temperature circulating layer, 1-4153 vacuum layer, 1-416 circulating liquid outlet, 1-417 upper cover, 1-418 circulating liquid inlet, and 5 master computer.

### DETAILED DESCRIPTION OF THE EMBODIMENTS

The technical solutions of the embodiments of the present disclosure are clearly and completely described below with reference to the accompanying drawings. Apparently, the described embodiments are merely a part rather than all of the embodiments of the present disclosure. All other embodiments obtained by those of ordinary skill in the art based on the embodiments of the present disclosure without creative efforts shall fall within the protection scope of the present disclosure.

An objective of the present disclosure is to provide an automated solution-phase synthesizer, so as to achieve automation of a solution-phase synthesis experiment and further improve experimental efficiency and experimental precision of the solution-phase synthesis experiment.

To make the above objective, features, and advantages of the present disclosure clearer and more comprehensible, the present disclosure will be further described in detail below with reference to the accompanying drawings and the specific embodiments.

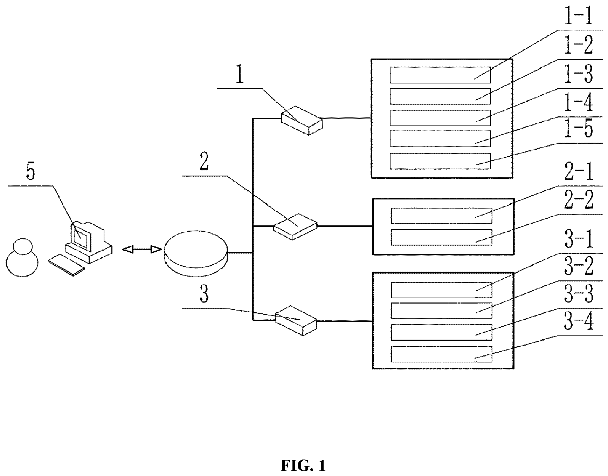

As shown in FIG. 1, an automated solution-phase synthesizer provided by the present disclosure includes: an automatic sample injection system 1, an assisting system for solution-phase synthesis 2, an automatic online monitoring system for solution-phase synthesis 3, and a master computer 5.

The automatic sample injection system 1, the assisting system for solution-phase synthesis 2 and the automatic online monitoring system for solution-phase synthesis 3 are all electrically connected to the master computer 5.

The automatic sample injection system 1 is configured to complete an automatic sample injection operation according to a sample injection instruction from the master computer 5. The assisting system for solution-phase synthesis 2 is configured to control temperature and illumination of solutions to undergo reaction according to a temperature control instruction and an illumination control instruction from the master computer 5. The automatic online monitoring system is configured to monitor a reaction solution and generate a monitoring report. The master computer 5 generates an experimental analysis result according to the monitoring report.

A solution in a reactor needs to be stirred by a machine when the automated solution-phase synthesizer is used to perform a solution-phase experiment. An existing reactor is extremely likely to splash the solution in a stirring process. Moreover, in some low-temperature experiments, water vapor is likely to be generated on an outer wall of the existing reactor, which makes the reaction solution in the reactor unobservable. Therefore, based on the automated solution-phase synthesizer provided by the present disclosure, the present disclosure provides a reactor 1-41 as a matching reactor of the entire automated solution-phase synthesizer accordingly. Certainly, due to incomparable advantages over other existing reactors, the reactor 1-41 provided by the present disclosure may also be used in other experimental apparatuses.

The reactor 1-41 provided by the present disclosure is connected to the automatic sample injection system 1, the assisting system for solution-phase synthesis 2 and the automatic online monitoring system for solution-phase synthesis 3 separately by means of pipelines.

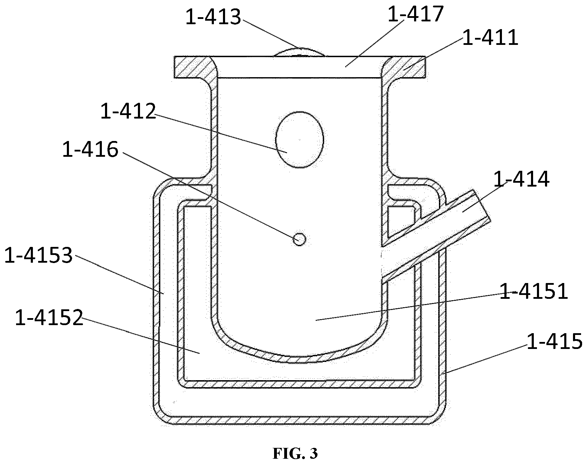

As shown in FIG. 3, the reactor 1-41 includes: a bottle mouth 1-411, a sample injection port 1-412, an exhaust port 1-413, a sampling port 1-414, a bottle body 1-415, and a circulating liquid outlet 1-416.

A set angle (preferably 60 degrees) is formed between a center line of the sampling port 1-414 and a center line of the bottle body 1-415. The exhaust port 1-413 and the sample injection port 1-412 are symmetrically arranged with a center line of the bottle mouth 1-411 as a center. A spatial angle between a center line of the sampling port 1-414 and a center line of the exhaust port 1-413 is 60 degrees. The specific angle is set to prevent the reaction solution from splashing out of the reactor in the stirring process.

The bottle body 1-415 sequentially includes a reaction liner 1-4151, a temperature circulating layer 1-4152 and a vacuum layer 1-4153 from inside to outside. A bottom of the reaction liner 1-4151 has an arc-shaped structure.

The sampling port 1-414 is in communication with the reaction liner 1-4151.

The circulating liquid outlet 1-416 and the circulating liquid inlet 1-418 are both in communication with the temperature circulating layer 1-4152, and the circulating liquid outlet 1-416 and the circulating liquid inlet 1-418 are diagonally arranged.

The bottle mouth 1-411 is provided with an upper cover 1-417, and alternatively, the bottle mouth 1-411 is made into a sealing structure. The upper cover 1-417 provided is preferably a quartz plate with high transmittance. When the bottle mouth 1-411 is provided with the upper cover 1-417, in order to improve sealing performance, the reactor 1-41 provided preferably further includes a sealing clip. The sealing clip is configured to connect the bottle mouth 1-411 and the upper cover 1-417 in a clipping manner. The sealing clip has a double-jacketed eggplant-shaped structure, which may specifically use two flange clamps that are improved to change a shape formed between the two flange clamps from a U shape to an eggplant shape.

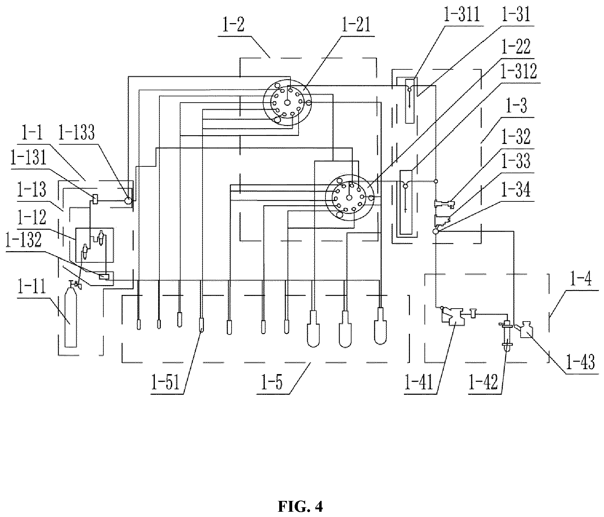

As shown in FIG. 4, the automatic sample injection system 1 provided by the present disclosure includes: an inert gas conveying module 1-1, a sampling channel switching module 1-2, a quantification module 1-3, a disposal module 1-4, and a liquid storage module 1-5.

The liquid storage module 1-5 and the sampling channel switching module 1-2 are both connected to the inert gas conveying module 1-1 by means of pipelines. The quantification module 1-3 is connected to the sampling channel switching module 1-2 and the disposal module 1-4 separately by means of pipelines. The liquid storage module 1-5 is connected to the sampling channel switching module 1-2 by means of pipelines.

The inert gas conveying module 1-1, the sampling channel switching module 1-2 and the quantification module 1-3 are all electrically connected to the master computer 5.

The inert gas conveying module 1-1 is configured to convey inert gas stored inside the inert gas conveying module 1-1 to the liquid storage module 1-5 and the sampling channel switching module 1-2 separately by means of the pipelines. The sampling channel switching module 1-2 is configured to extract the to-be-reacted solutions stored in the liquid storage module 1-5 and to switch a channel for extracting the solution to undergo reaction. The quantification module 1-3 is configured to determine an amount of the to-be-reacted solution that is injected into the disposal module 1-4.

The master computer 5 is configured to control the inert gas conveying module 1-1 and the quantification module 1-3 to be switched on or switched off and to control the sampling channel switching module 1-2 to switch the channel.

The master computer 5 may control a programmable logic controller (PLC) to programmatically control other external apparatuses through a communication protocol, so as to satisfy normal running of an automated program.

The inert gas conveying module 1-1 includes: an inert gas storage container 1-11, a pressure regulating filter 1-12, and a first solenoid valve unit 1-13.

The inert gas storage container 1-11 is connected to the liquid storage module 1-5 and the sampling channel switching module 1-2 separately by means of pipelines. The pressure regulating filter 1-12 and the first solenoid valve unit 1-13 are arranged on the pipeline connected between the inert gas storage container 1-11 and the liquid storage module 1-5, or on the pipeline connected between the inert gas storage container 1-11 and the sampling channel switching module 1-2.

The first solenoid valve unit 1-13 includes: a first two-way solenoid valve 1-131, a second two-way solenoid valve 1-132, and a three-way solenoid valve 1-133.

The first two-way solenoid valve 1-131 and the three-way solenoid valve 1-133 are arranged on the pipeline connected between the inert gas storage container 1-11 and the sampling channel switching module 1-2. The second two-way solenoid valve 1-132 is arranged on the pipeline connected between the inert gas storage container 1-11 and the liquid storage module 1-5.

Preferably, the number of the pressure regulating filters 1-12 is two, and the two pressure regulating filters 1-12 are arranged on the pipeline connected between the inert gas storage container 1-11 and the sampling channel switching module 1-2 and the pipeline connected between the inert gas storage container 1-11 and the liquid storage module 1-5, respectively.

The liquid storage module 1-5 includes N liquid storage bottles 1-51.

Each liquid storage bottle 1-51 is connected to the inert gas conveying module 1-1 by means of a pipeline. A bottle bottom of the liquid storage bottle 1-51 is conical or arc-shaped.

Each liquid storage bottle 1-51 includes: a first channel opening, a second channel opening, a third channel opening, and a bottle cap.

The first channel opening is configured to be connected to the sampling channel switching module 1-2 by means of a pipeline. The second channel opening is configured to be connected to the inert gas conveying module 1-1 by means of a pipeline. The third channel opening is configured to discharge gas or liquid from the liquid storage bottle 1-51.

The bottle cap is connected to the bottle mouth 1-411 of the liquid storage bottle 1-51 in a threaded manner.

Inert gas is slight positive pressured to fill each liquid storage bottle 1-51, so as to avoid influence on accuracy of sample injection caused by negative pressure generated by a closed liquid storage bottle 1-51 due to decrease of liquid.

There are preferably four types of liquid storage bottles 1-51 provided by the present disclosure: a 10 mL sharp-bottomed liquid storage bottle, a 20 mL sharp-bottomed liquid storage bottle, a 500 mL round-bottomed liquid storage bottle, and a 125 mL two-port liquid storage bottle. The 10 mL sharp-bottomed liquid storage bottle and the 20 mL sharp-bottomed liquid storage bottle are mainly configured to store block samples and reagent catalysts. A sharp bottom is designed to introduce a pipeline to the bottle bottom 1-512 so as to avoid loss and waste of storage liquid. An internal thread is designed to facilitate matching with a customized polytetrafluoroethylene bottle cap. The 500mL round-bottom liquid storage bottle is mainly configured to store an ultra-dry organic solvent, and the 125 mL two-port bottle is mainly configured to store an organic solvent for diluting reaction liquid or even waste liquid. A sample injection port 1-412 at a side of the reactor is mainly configured for insertion and pulling of a sampling needle during on-line monitoring. All the liquid storage bottles 1-51 are made of transparent tube sealing glass resistant to pressure. In order to facilitate observation of the remaining amount of the storage liquid by an instrument user, brown or black is not used.

As may be seen from an overall structure of automatic sample injection system, in a research and development process of a synthesizer, in addition to the core design of a reactor, a light source and a close cooperation between an automatic sample injection and a software of the master computer 5, customized accessories that play an assisting and basic role are also designed, and mainly include various liquid storage bottles 1-51 and corresponding bottle caps.

A design of a customized bottle cap matching a customized liquid storage bottle 1-51 undergoes repeated exploration, verification and modification. The bottle cap mentioned above has three channels for gas introduction, liquid introduction, and gas discharge, respectively. In order to ensure concentration stability of the storage liquid and accuracy of the automatic sample injection, the bottle cap has to be tightly sealed, convenient to open or close, corrosion-resistant, and durable. A length of a polytetrafluoroethylene bottle cap is increased, an on-off switch is embedded in the bottle cap, and a bottom of the bottle cap is thinned and an inverted cone connection is performed, such that compaction seal is ensured without a sealing ring and the connection is tight. A triangular inverted cone connection above the bottle cap ensures tightness of a connecting pipeline, and an initial customized bottle cap is obtained. After repeated tests, it is found that liquid leakage occurs at the on-off switch embedded in the initial bottle cap, so an ordinary elastic sealing washer is additionally arranged at the on-off switch. The washer is located outside the bottle cap and requires no corrosion resistance. In this way, a polytetrafluoroethylene three-channel compact bottle cap is obtained.

The sampling channel switching module 1-2 includes: a first multi-channel switching valve 1-21 and a second multi-channel switching valve 1-22.

The first multi-channel switching valve 1-21 is connected to M liquid storage bottles 1-51 by means of pipelines. The second multi-channel switching valve 1-22 is connected to N-M liquid storage bottles 1-51 by means of pipelines. M is a number of liquid storage bottles connected with the first multi-channel switching valve; N is a total number of liquid storage bottles; and N-M is a difference between N liquid storage bottles and the M liquid storage bottles.

Two ten-channel switching valves may be connected to liquid storage bottles 1-51 with different specifications in a parallel or crossed manner. For convenience of use, a 10th channel of each of the two ten-channel switching valves is always connected to inert gas, a 9th channel of each of the two ten-channel switching valves is connected to a common ultra-dry solvent (for example, dichloromethane), and the 8th channel of each of the two ten-channel switching valves is connected to a secondary ultra-dry solvent (for example, acetonitrile or toluene etc.). Other channels of each of the two ten-channel switching valves may be connected to the same or different storage liquids in an independent or crossed manner, thereby avoiding a cross contamination.

Generally, according to experimental requirements, liquid storage bottles 1-51 with a sample injection amount less than or approximate to 1 mL are connected to the first multi-channel switching valve 1-21, and liquid storage bottles 1-51 with a sample injection amount greater than or approximate to 1 mL are connected to the second multi-channel switching valve 1-22. All channel numbers of each of the multi-channel switching valves need to be in one-to-one correspondence to substances in all the liquid storage bottles 1-51. The inert gas storage container 1-11 is depressurized and filtered by a pressure reducing valve and the pressure regulating filter 1-12 in sequence, so as to provide a positive pressure and clean the pipelines.

The quantification module 1-3 includes: a syringe pump unit 1-31, a pressure sensor 1-32, a flowmeter 1-33, and a second solenoid valve unit 1-34.

An inlet of the syringe pump unit 1-31 is connected to the sampling channel switching module 1-2 by means of a pipeline. An outlet of the syringe pump unit 1-31 is connected to the flowmeter 1-33 by means of a pipeline. The flowmeter 1-33 is connected to the disposal module 1-4 by means of a pipeline. The second solenoid valve unit 1-34 is arranged on the pipeline connected between the flowmeter 1-33 and the disposal module 1-4. The pressure sensor 1-32 is arranged on the pipeline connected between the outlet of the syringe pump unit 1-31 and the flowmeter 1-33. The second solenoid valve unit 1-34, the pressure sensor 1-32 and the flowmeter 1-33 are all electrically connected to the master computer 5.

The syringe pump unit 1-31 includes: a first syringe pump 1-311 and a second syringe pump 1-312.

The first syringe pump 1-311 is connected to one channel of the first multi-channel switching valve 1-21 by means of a pipeline. The second syringe pump 1-312 is connected to one channel of the second multi-channel switching valve 1-22 by means of a pipeline. A measuring range of the first syringe pump 1-311 is smaller than that of the second syringe pump 1-312.

In order to ensure accuracy of sample injection, when the entire sample injection system provided by the present disclosure has a sample injection amount smaller than or approximate to 1 mL, a sample is injected through a pipeline connected to a syringe pump with a small measuring range (that is, the first syringe pump 1-311). When the sample injection system has a sample injection amount greater than or approximate to 1 mL, a sample is injected through a pipeline connected to a syringe pump with large measuring range (that is, the second syringe pump 1-312). The two pipelines run in parallel and then merge into one and enter the reactor. An injector on a syringe pump may be replaced, with a minimum volume of 500 µL and a maximum volume of 25 mL, and the number of switching valves and the number of syringe pumps may be modularly increased to expansion. Each pipeline for sample injection is powered by a syringe pump. Each pipeline for sample injection is dual controlled via the cooperation of a corresponding syringe pump and a high-precision flowmeter 1-33 behind the syringe pump to ensure the accuracy of sample injection. As for the syringe pump and the flowmeter 1-33, the amount metered by the flowmeter 1-33 is used as a final sample injection amount. The first reason for such setting is that accuracy (1%) of the syringe pump itself is lower than accuracy (2‰) of the flowmeter 1-33 itself. The second reason is that the syringe pump cannot identify bubbles or whether there is storage liquid, an amount difference metered by the flowmeter 1-33 between gas and liquid is large, and a large metering change generated when gas passes may be fed back to the flowmeter 1-33 and the syringe pump for dual self-correction.

The disposal module 1-4 includes: a reactor 1-41, a solution pipe 1-42, and a waste liquid bottle 1-43.

A sample injection port 1-412 of the reactor 1-41 and a liquid inlet of the waste liquid bottle are both connected to the second solenoid valve unit 1-34 by means of pipelines. The solution pipe 1-42 is connected to an exhaust port 1-413 of the reactor 1-41 by means of a pipeline.

The second solenoid valve unit 1-34 is configured to close a pipeline connected between the flowmeter 1-33 and the reactor 1-41 and open a pipeline connected between the flowmeter 1-33 and the waste liquid bottle 1-43 when a solution in the reactor 1-41 reaches a set amount.

After a high-precision flowmeter 1-33 controls a required sample injection amount, a solenoid valve next to the flowmeter 1-33 may immediately switch a redundant solution to undergo reaction into the waste liquid bottle 1-43, so as to ensure an accurate amount of sample injection into the reactor 1-41. After each sample injection, an instruction about whether to clean a pipeline may be written in the master computer 5 as required, and waste liquid generated after pipeline cleaning enters the waste liquid bottle 1-43. An oil bubbler that may prevent reverse suction may be connected to the liquid inlet of the reactor 1-41, such that air pressure in the reactor 1-41 may be ensured to be normal, and no foreign gas or water vapor may enter the reactor, so as to satisfy sealing requirements of the entire automatic sample injection system 1.

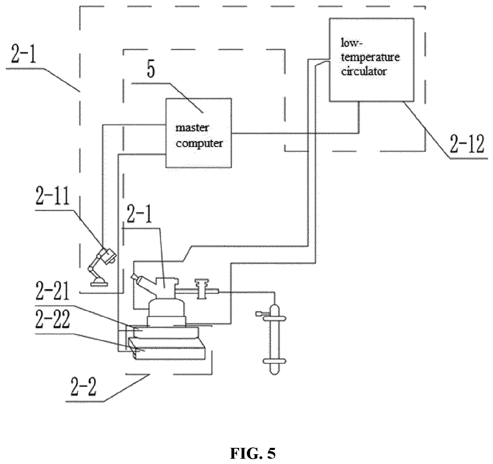

As shown in FIG. 5, the assisting system for solution-phase synthesis 2 includes: a temperature control device 2-1 and a mixing device 2-2.

A software program is implanted in the master computer 5, and the software program is configured to control a specific work flow of the mixing device 2-2 and the temperature control device 2-1.

The reactor 1-41 is arranged on the mixing device 2-2, and the mixing device 2-2 and the temperature control device 2-1 are both electrically connected to the master computer 5.

The temperature control device 2-1 includes: an ultraviolet light source 2-11 and a low-temperature circulator 2-12.

A liquid outlet of the low-temperature circulator 2-12 is connected to the circulating liquid inlet 1-418 by means of a pipeline. A liquid inlet of the low-temperature circulator 2-12 is connected to the circulating liquid outlet 1-416 by means of a pipeline.

The ultraviolet light source 2-11 is configured to illuminate the reactor 1-41. In the present disclosure, the ultraviolet light source 2-11 is preferably a mercury lamp light source with Model CEL-M series.

The mixing device 2-2 includes an automatic stirrer 2-21 and a thermostat plate 2-22.

The automatic stirrer 2-21 and the thermostat plate 2-22 are both electrically connected to the master computer 5. The automatic stirrer 2-21 is configured to stir a mixed solution in the reactor 1-41 according to a stirring instruction from the master computer 5. The reactor 1-41 is arranged on the automatic stirrer 2-21. The automatic stirrer 2-21 is arranged on the thermostat plate 2-22. The automatic stirrer 2-21 rotates to drive the reactor 1-41 to rotate, so as to achieve a stirring function under the action of a centrifugal force. The thermostat plate 2-22 is configured to keep a temperature of the reactor 1-41 constant.

In addition, the automatic stirrer 2-21 in the present disclosure may also be a stirring rod, which is arranged above the reactor 1-41, so as to uniformly mix the mixed solution by stirring the liquid in the reactor.

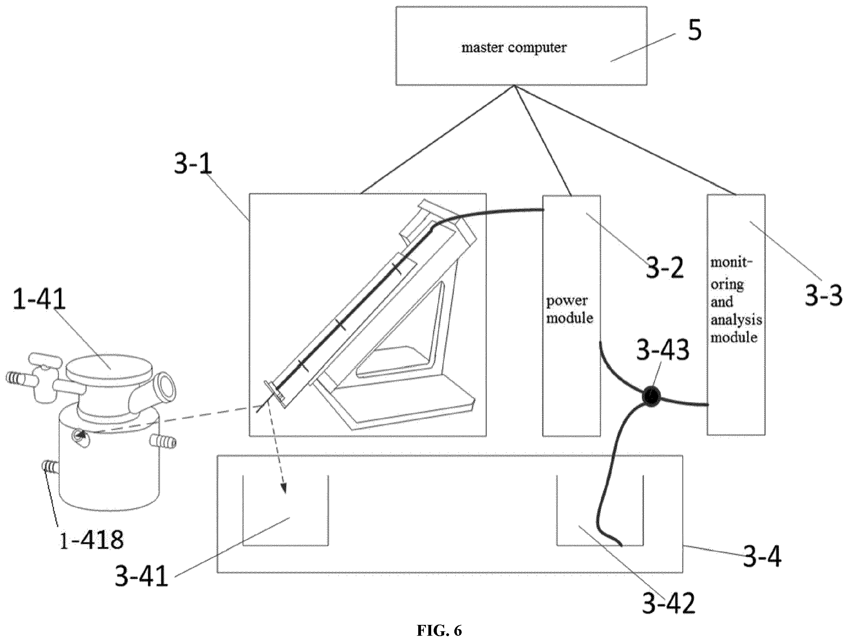

As shown in FIG. 6, the automatic online monitoring system for solution-phase synthesis 3 includes: a sampling module 3-1, a power module 3-2, and a monitoring and analysis module 3-3.

The sampling module 3-1 is connected to the power module 3-2 by means of a pipeline. The power module 3-2 is connected to the monitoring and analysis module 3-3 by means of a pipeline. The sampling module 3-1, the power module 3-2 and the monitoring and analysis module 3-3 are all electrically connected to the master computer 5.

The sampling module 3-1 is configured to suck a reaction solution contained in the reactor 1-41. The power module 3-2 is configured to provide a suction force for the sampling module 3-1 according to a suction instruction from the master computer 5 and inject the sucked reaction solution into the monitoring and analysis module 3-3. The monitoring and analysis module 3-3 is configured to generate a monitoring report according to the reaction solution and then transmit the monitoring report to the master computer 5. The master computer 5 generates an analysis result according to the monitoring report.

Specific structures of the modules above according to the present disclosure will be described below.

The sampling module 3-1 includes: a stainless steel needle, a slide rail, and a turntable.

The stainless steel needle is connected to the power module 3-2 by means of a conduit. The conduit is arranged on the slide rail, and a set angle (which is preferably 60 degrees) is formed between the slide rail and a horizontal line. The stainless steel needle is fixedly arranged at one end of the slide rail, and the other end of the slide rail is a free end. The slide rail is configured to drive the stainless steel needle to slide, and the stainless steel needle is configured for inserting into the reactor 1-41 to suck the reaction solution. The slide rail is fixedly arranged on the turntable. The turntable and the slide rail are both electrically connected to the master computer 5.

The slide rail includes a slide plate and a support frame. The slide plate moves downwards along the support frame, such that the stainless steel needle inserts into the reactor 1-41 to suck the reaction solution. The support frame is fixed on the turntable, and the turntable may drive the entire slide rail to rotate, such that the stainless steel needle may suck liquid from different containers. The slide rail is fixed at a position corresponding to the reactor 1-41 and is adjustable for lifting and lowering. In order to fix the conduit more firmly, the slide rail may be provided with a slideway so as to fix the conduit. The turntable (a machining module) drives a supporting slide rail to rotate by a certain angle in different directions to reach different positions and stay.

The stainless steel needle is preferably needle 9# in the present disclosure. A pierceable seal rubber pad and an organic filter head are further arranged at a connecting position of the stainless steel needle and the conduit. Selectable specifications of the organic filter head include 0.22 µm, 0.45 µm, and 0.8 µm. In use, a front end of the organic filter head is slightly blocked with absorbent cotton that is equivalent to a sieve for preliminary filtering molecules in the reaction solution, and filtering is further performed through a filter membrane of the organic filter head to satisfy the requirement of an injection liquid phase, thus implementing double filtration, and effectively avoiding blockage of the organic filter head.

The power module 3-2 includes: a power pump. The power pump is a syringe pump or a plunger pump. The power pump selected by the present disclosure has a large suction force and a reverse suction function as well. The reverse suction function is set to facilitate the cleaning of the pipelines of the entire automatic online monitoring system for solution-phase synthesis 3.

The power pump is connected to the sampling module 3-1 and the monitoring and analysis module 3-3 separately by means of pipelines.

The monitoring and analysis module 3-3 is preferably a high performance liquid chromatograph (HPLC). In order to implement a function of automatic monitoring, the present disclosure improves the high performance liquid chromatograph as follows: a sample injection portion is disassembled and adjusted to be connected to an six-way valve for online sample injection through a loop, and is controlled after receiving a short-circuit signal from the master computer 5 to be triggered to operate. An operation method is selected routinely, and an automatic flushing is performed after an operation method is completed. The high performance liquid chromatograph gives a report in TXT format according to an extracted reaction solution sample, so as to allow the master computer 5 to extract data and generate an analysis report.

Based on the above description, in order to facilitate the cleaning of the entire system, the automatic online monitoring system for solution-phase synthesis 3 provided by the present disclosure further includes a cleaning module 3-4.

The cleaning module 3-4 is connected to the sampling module 3-1 and the power module 3-2 separately by means of pipelines.

The cleaning module 3-4 includes: a first liquid container 3-41, a second liquid container 3-42, and a solenoid valve 3-43.

Under a driving effect of the turntable, the stainless steel needle may suck a cleaning solution from the first liquid container 3-41. The second liquid container 3-42, the power module 3-2 and the monitoring and analysis module 3-3 are all connected to the solenoid valve 3-43 by means of pipelines. After the power module 3-2 sucks a cleaning solution from the second liquid container 3-42 into the power pump through the reverse suction function, the cleaning solution may be injected into the monitoring and analysis module 3-3 for cleaning. The cleaning solution used in the present disclosure is preferably an organic solvent.

The solenoid valve 3-43 is preferably a six-way valve (a high-pressure flow path switching valves) for online sample injection. The six-way valve is equivalent to a six-way valve for sample injection of a high performance solution-phase sample injector, and is connected to a loop of the HPLC and the waste liquid. This six-way valve is different from the six-way valve in the HPLC in that this six-way valve is online alone and controlled by the master computer 5 or the HPLC.

Sliding of the slide rail and rotation of the turntable achieved in the present disclosure are driven by an existing servo motor, which is an existing conventional technology and will not be repeated herein.

In a process of automatic sampling, monitoring and report analysis of the reaction solution by using the automatic online monitoring system for solution-phase synthesis 3 provided by the present disclosure, it is necessary to rely on software programs. Specific advantages of the automatic online monitoring system for solution-phase synthesis 3 provided by the present disclosure will be described in detail in combination with the software program implanted in the master computer 5. Since an emphasis of the present disclosure is to protect a hardware structure, merely theoretical description is made for software control.

In the present disclosure, software in a Shimadzu database (DB) version is used to analyze a liquid phase. A liquid phase is controlled to run automatically as required by combining a short-circuit signal transmitted from the master computer 5 to the PLC with a short-circuit connector for control triggering which is reserved. A PDF report and a TXT report of ASCII codes of original data are automatically generated after running, and the master computer 5 extracts the TXT report.

An "online monitoring" interface is configured in the master computer 5, so as to always extract the latest TXT report. According to a naming method of a liquid phase, a TXT report newly generated is always named under a last TXT report, so as to facilitate the extraction of the master computer 5. After the master computer 5 extracts a new TXT report, comparison, determination and analysis may be performed according to an internal logical relation implanted.

A reaction principle of one-pot "pre-activation" is taken as an example, whether an ordinary activation mode or a photo-mediated activation mode is used, "sampling monitoring" is required to monitor whether a donor is fully activated after activation, that is, activation monitoring, and an activation result is fed back. If the donor is not fully activated, the donor will be continuously activated or repeatedly activated or continuously photo-activated. If the donor is fully activated, an acceptor is added for reaction to enter "reaction time". After a certain time and temperature, "sampling monitoring" is performed to determine whether the acceptor disappears completely, and whether a new compound is generated, that is reaction monitoring, and a reaction result is fed back. Whether to continue a next-cycle reaction is mainly determined according to whether the acceptor remains. If the acceptor remains, the reaction time is further prolonged or a reaction temperature is increased to continue reaction. If the acceptor disappears or is below a certain limit, a next cycle may be continued by default, and an activation reaction may be continued and monitored. If the acceptor always exists above a certain limit, it is considered to terminate automatic synthesis.

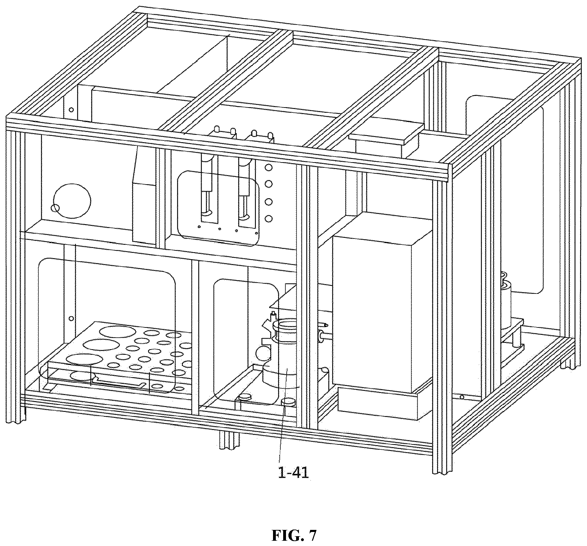

Based on the above description, all the systems provided by the present disclosure are organically integrated, and a physical object of the automated solution-phase synthesizer obtained is as shown in FIG. 7. In the combination mode, the automated solution-phase synthesizer has a length, a width and a height of 870 cm, 730 cm and 600 cm, respectively. The above assembly mode is not the only assembly mode of the automated solution-phase synthesizer provided by the present disclosure, and the combination modes that may be obtained by those skilled in the art by combining the above description of the present disclosure all fall within the protection scope of the present disclosure.

The automated solution-phase synthesizer is internally provided with a power distribution cabinet, so as to provide electric energy for the entire automated solution-phase synthesizer. Moreover, in order to reduce a layout space, the automated solution-phase synthesizer provided by the present disclosure has a multi-layer internal structure, each layer structure is correspondingly provided with a door, and the door is provided with a stainless steel handle. The doors are mostly made of brown plexiglass, such that an operator may observe an internal experimental process conveniently, and further light and heat are blocked. Each door is divided into a lower door, a side door and an upper door, and the side door include a left door and a right door. Each door is provided with a door stop and a door opening so as to ensure sealing performance of the entire automated solution-phase synthesizer.

In order to further facilitate taking samples, a linear slide rail is further arranged below the liquid storage module 1-5, and the linear slide rail is fixed on a bottom plate. A side baffle is used to separate the liquid storage module 1-5 from the mixing device 2-2.

Each embodiment of the present specification is described in a progressive manner, each embodiment focuses on the difference from other embodiments, and reference may be made to each other for the same and similar parts between the embodiments.

Specific examples are used herein to explain the principles and implementation mode of the present disclosure. The foregoing description of the embodiments is merely intended to help understand the method of the present disclosure and its core ideas. Besides, various modifications may be made by those of ordinary skill in the art to specific implementation mode and the scope of application in accordance with the ideas of the present disclosure. In conclusion, the content of this specification shall not be construed as a limitation to the present disclosure.

## Claims

1. An automated solution-phase synthesizer, comprising: an automatic sample injection system, an assisting system for solution-phase synthesis, an automatic online monitoring system for solution-phase synthesis, and a master computer, wherein
the automatic sample injection system, the assisting system for solution-phase synthesis and the automatic online monitoring system for solution-phase synthesis are all electrically connected to the master computer; and
the automatic sample injection system is configured to complete an automatic sample injection operation according to a sample injection instruction from the master computer; the assisting system for solution-phase synthesis is configured to control temperature and illumination of to-be-reacted solutions according to a temperature control instruction and an illumination control instruction from the master computer; the automatic online monitoring system is configured to monitor a first reaction solution therein, and generate a monitoring report; and the master computer generates an experimental analysis result according to the monitoring report.

2. The automated solution-phase synthesizer according to claim 1, further comprising a reactor, wherein
the reactor is connected to the automatic sample injection system, the assisting system for solution-phase synthesis and the automatic online monitoring system for solution-phase synthesis separately by means of first pipelines.

3. The automated solution-phase synthesizer according to claim 2, wherein the reactor comprises: a bottle mouth, a bottle body, a sample injection port, an exhaust port, a sampling port, a circulating liquid outlet, and a circulating liquid inlet;
a set angle is formed between a center line of the sampling port and a center line of the bottle body; and a center line of the exhaust port is perpendicular to the center line of the bottle mouth;
the bottle body sequentially comprises a reaction liner, a temperature circulating layer and a vacuum layer from inside to outside; and a bottom of the reaction liner is of an arc-shaped structure;
the sampling port is in communication with the reaction liner; and
the circulating liquid outlet and the circulating liquid inlet are both in communication with the temperature circulating layer, and the circulating liquid outlet and the circulating liquid inlet are diagonally arranged.

4. The automated solution-phase synthesizer according to claim 2, wherein the automatic sample injection system comprises: an inert gas conveying module, a sampling channel switching module, a quantification module, a disposal module, and a liquid storage module;
the liquid storage module and the sampling channel switching module are both connected to the inert gas conveying module by means of second pipelines; the quantification module is connected to the sampling channel switching module and the disposal module separately by means of third pipelines; and the liquid storage module is connected to the sampling channel switching module by means of a fourth pipeline;
the inert gas conveying module, the sampling channel switching module and the quantification module are all electrically connected to the master computer;
the inert gas conveying module is configured to convey inert gas stored inside the inert gas conveying module to the liquid storage module and the sampling channel switching module separately by means of the second pipelines; the sampling channel switching module is configured to extract the to-be-reacted solutions stored in the liquid storage module and to switch a respective channel of channels for extracting a corresponding one of the to-be-reacted solutions; and the quantification module is configured to determine an amount of one of the to-be-reacted solutions which is injected into the disposal module; and
the master computer is configured to control the inert gas conveying module and the quantification module to be switched on or switched off, and to control the sampling channel switching module to switch the respective channel.

5. The automated solution-phase synthesizer according to claim 4, wherein the sampling channel switching module comprises: a first multi-channel switching valve and a second multi-channel switching valve;
the first multi-channel switching valve is connected to M liquid storage bottles by means of fifth pipelines; and the second multi-channel switching valve is connected to N-M liquid storage bottles by means of sixth pipelines, wherein M is a number of liquid storage bottles connected with the first multi-channel switching valve; N is a total number of liquid storage bottles; and N-M is a difference between N liquid storage bottles and the M liquid storage bottles;
the quantification module comprises: a syringe pump unit, a pressure sensor, a flowmeter, and a second solenoid valve unit;
an inlet of the syringe pump unit is connected to the sampling channel switching module by means of a seventh pipeline; an outlet of the syringe pump unit is connected to the flowmeter by means of an eighth pipeline; the flowmeter is connected to the disposal module by means of a ninth pipeline; the second solenoid valve unit is arranged on the ninth pipeline connected between the flowmeter and the disposal module; the pressure sensor is arranged on the eighth pipeline connected between the outlet of the syringe pump unit and the flowmeter; and the second solenoid valve unit, the pressure sensor and the flowmeter are all electrically connected to the master computer;
the disposal module comprises: a solution pipe and a waste liquid bottle;
a sample injection port of the reactor and a liquid inlet of the waste liquid bottle are both connected to the second solenoid valve unit by means of tenth pipelines; and the solution pipe is connected to an exhaust port of the reactor by means of an eleventh pipeline; and
the second solenoid valve unit is configured to close a twelfth pipeline connected between the flowmeter and the reactor and open a thirteenth pipeline connected between the flowmeter and the waste liquid bottle when one of the to-be-reacted solutions which is in the reactor reaches a set amount.

6. The automated solution-phase synthesizer according to claim 5, wherein the syringe pump unit comprises: a first syringe pump and a second syringe pump; and
the first syringe pump is connected to one channel of the first multi-channel switching valve by means of a fourteenth pipeline; the second syringe pump is connected to one channel of the second multi-channel switching valve by means of a fifteenth pipeline; and a measuring range of the first syringe pump is smaller than a measuring range of the second syringe pump.

7. The automated solution-phase synthesizer according to claim 2, wherein the assisting system for solution-phase synthesis comprises: a mixing device and a temperature control device; and
the reactor is arranged on the mixing device, and the mixing device and the temperature control device are both electrically connected to the master computer.

8. The automated solution-phase synthesizer according to claim 7, wherein the temperature control device comprises: an ultraviolet light source and a low-temperature circulator;
a liquid outlet of the low-temperature circulator is connected to a circulating liquid inlet by means of a sixteenth pipeline; a liquid inlet of the low-temperature circulator is connected to a circulating liquid outlet by means of a seventeenth pipeline; and the ultraviolet light source is configured to illuminate the reactor;
the mixing device comprises: an automatic stirrer and a thermostat plate;
the automatic stirrer and the thermostat plate are both electrically connected to the master computer; the automatic stirrer is configured for stirring a mixed solution in the reactor according to a stirring instruction from the master computer; the reactor is arranged on the automatic stirrer; and the thermostat plate is configured for keeping a temperature of the reactor constant.

9. The automated solution-phase synthesizer according to claim 2, wherein the automatic online monitoring system for solution-phase synthesis comprises: a sampling module, a power module, a monitoring and analysis module, and a cleaning module;
the sampling module is connected to the power module by means of an eighteenth pipeline; the power module is connected to the monitoring and analysis module by means of a nineteenth pipeline; and the sampling module, the power module and the monitoring and analysis module are all electrically connected to the master computer;
the sampling module is configured to suck a second reaction solution contained in the reactor; the power module is configured to provide a suction force for the sampling module according to a suction instruction from the master computer and inject the second reaction solution sucked by the sampling module into the monitoring and analysis module to be used as the first reaction solution; the monitoring and analysis module is configured to generate a monitoring report according to the first reaction solution and then transmit the monitoring report to the master computer; and the master computer generates an analysis result according to the monitoring report; and
the cleaning module is connected to the sampling module and the power module separately by means of twentieth pipelines.

10. The automated solution-phase synthesizer according to claim 9, wherein the sampling module comprises: a stainless steel needle, a slide rail, and a turntable;
the stainless steel needle is connected to the power module by means of a conduit; the conduit is arranged on the slide rail, and a set angle is formed between the slide rail and a horizontal line; the stainless steel needle is fixedly arranged at one end of the slide rail, and an other end of the slide rail is a free end; the slide rail is configured to drive the stainless steel needle to slide, and the stainless steel needle is configured for inserting into the reactor to suck the second reaction solution; the slide rail is fixedly arranged on the turntable; and the turntable and the slide rail are both electrically connected to the master computer;
the power module comprises: a power pump; and the power pump is a syringe pump or a plunger pump;
the power pump is connected to the sampling module and the monitoring and analysis module separately by means of twenty-first pipelines;
the monitoring and analysis module is a high performance liquid chromatograph;
the cleaning module comprises: a first liquid container, a second liquid container, and a solenoid valve;
the stainless steel needle sucks a cleaning solution from the first liquid container; and the second liquid container, the power module and the monitoring and analysis module are all connected to the solenoid valve by means of twenty-second pipelines.
